# EUROPÄISCHE PATENTANMELDUNG

(11) **EP 1 322 124 A1**
(43) Veröffentlichungstag der Anmeldung: **25.06.2003**
(21) Anmeldenummer: 01130335.1
(22) Anmeldetag: 19.12.2001
(51) Int. Cl.: H04Q 3/00

(54) **Verfahren zum Betreiben eines Kommunikationsnetzes**

(71) Anmelder: SIEMENS AKTIENGESELLSCHAFT, 80333 München (DE)
(72) Erfinder: Fendt, Oliver, 80689 München (DE)

(57) **Zusammenfassung**

Zum Betrieb des mindestens ein Netzmanagementsystem (NMS) und mehrere Netzkomponenten (NE1,NE2,NE3,EM) aufweisenden Kommunikationsnetzes (KN) werden Managementdaten (MD) zwischen dem mindestens einen Netzmanagementsystem (NMS) und mindestens einer der Netzkomponenten (NE1,NE2,NE3,EM) über die von einem Web Service (WS) zur Verfügung gestellte Kommunikationsinfrastruktur (WSIS) ausgetauscht. Hierdurch werden offene Schnittstellen zwischen den Netzkomponenten (NE1,NE2,NE3,EM) und dem mindestens einen Netzmanagementsystem (NMS) geschaffen, über die ein flexibel erweitererbares, zuverlässiges sowie herstellerunabhängiges Management von unter anderem auch verschiedene Netzmanagementsysteme (NMS) aufweisenden Kommunikationsnetzes (KN) möglich wird.

## Beschreibung

Die Globalisierung und Deregulierung des Telekommunikationsmarktes führt zu einem hohem Wettbewerbsdruck unter einer großen Anzahl von Telekommunikationsnetzbetreibern. Deshalb ist es aus Sicht der Telekommunikationsnetzbetreiber wünschenswert, attraktivere Dienste anbieten zu können sowie die laufenden Kosten des Betriebes eines Kommunikationsnetzes so gering wie möglich zu halten. Ein wesentlicher Bestandteil der laufenden Kosten besteht in den Aufwendungen für das mindestens eine Netzmanagementsystem. Derartige Netzmanagementsysteme sollten unterschiedliche Anforderungen erfüllen. Hierzu gehören unter anderem eine rasche Erweiterbarkeit, hohe Flexibilität und leichte Integrierbarkeit von weiteren Managementsystemen unterschiedlichster Anbieter. Ferner ist eine einfache Bedienbarkeit sowie eine robuste, leicht skalierbare und plattformunabhängige Realisierung von Netzmanagementfunktionen wünschenswert.

Derzeitig realisierte Netzmanagementsysteme sind aufgrund der historischen Entwicklung des Telekommunikationsmarktes stark fokussiert, komplex in der Bedienung und Wartung sowie nur unter einem erheblichem Aufwand erweiterbar und stark begrenzt in Ihrer Skalierbarkeit. Hierbei sind bei Netzmanagementsystemen im wesentlichen drei unterschiedliche Fokussierungsbereiche bekannt: die Technologiefokussierung, die Herstellerfokussierung sowie die verkehrsbezogene Fokussierung.

Die Technologiefokussierung betrifft die für die unterschiedlichen Einsatzgebiete innerhalb eines Telekommunikationsnetzes eines Netzmanagementsystems vorgesehenen Technologien, beispielsweise den Accessbereich, der Regional/Metro-Bereich und die Verwendung als Backbone-Netz. Für jedes der genannten Einsatzgebiete gibt es eigenständige Netzmanagementsysteme, die teilweise durch unterschiedliche Technologien realisiert sind. Die Herstellerfokussierung bezeichnet die teilweise proprietären Realisierungsformen von Netzmanagementsystemen der einzelnen, unterschiedlichen Hersteller, die auf Produkte eines Herstellers speziell zugeschnitten sind und zum Managen von Telekommunikationsnetzen Dritter oft ungeeignet sind. Unter der verkehrsbezogenen Fokussierung ist die Aufteilung in Sprach- und Datennetze zu verstehen.

Die Architektur von heutigen Netzmanagementsystemen ist durch Kommunikationsstrukturen zwischen den einzelnen Netzkomponenten geprägt, bei denen die Managementfunktionen durch speziell festgelegte, miteinander verknüpfte Funktionalitäten über speziell vorgesehene Programmodule realisiert sind. Derartige komplexe Netzmanagementsysteme wirken innerhalb eines Kommunikationsnetzes als riesiger "monolithischer Block", der schwer bedienbar ist und einen hohen Wartungsaufwand erfordert. Ein Update eines derartig komplexen Netzmanagementsystems ist ein zeitraubendes Verfahren, daß mit einem hohen Fehlerrisiko sowie finanziellen Aufwand verbunden ist. Zusätzlich sind derartige Netzmanagementsysteme schwer erweiterbar und skalierbar. Bisher werden in Kommunikationsnetzen zur Realisierung der Kommunikation zwischen unterschiedliche Netzkomponenten über Softwarekomponenten verschiedene Technologien wie CORBA ("Common Object Request Broker Architecture"), RMI ("Remote Method Invocation") und DCOM ("Distributed Component Object Model") eingesetzt.

Aus der Veröffentlichung "NGOSS Architecture Technology Neutral Specification", TeleManagementFORUM, Juli 2001 , S.26 ist ein abstraktes Verfahren bekannt, wie Netzmanagementsysteme in die Prozesse eines Netzwerkbetreibers eingebettet werden können. Hierin wird insbesondere eine Auslegung von Schnittstellen von Netzmanagementsystemen beschrieben, die erforderlich ist, um eine einfache Integration der Netzmanagementsystemfunktionen in Systemprozesse eine Netzbetreibers zu gewährleisten.

Darüber hinaus ist aus der Veröffentlichung "Multi-Technology Network Management Business Agreement", TeleManagementFORMUM, August 2001, S. 7-9 ein weiterer Ansatz zur Beschreibung von Schnittstellen eines "multitechnologie- und multivendorfähigen" Netzmanagementsystems bekannt, bei dem die Schnittstellen eines Netzmanagementsystems anhand der CORBA-IDL-Technologie (CORBA "Interface Definition Language") definiert und beschrieben werden. Die CORBA-IDL-Technologie ist ein Standard zur implementierungsunabhängigen Beschreibung der Syntax einer Schnittstelle. Die Nachteile dieses beschriebenes Ansatzes sind die geringe Flexibilität der verwendeten CORBA-IDL-Technologie sowie der hohe Wartungsaufwand.

Ferner sind Web Services, d.h. Netzdienste, zur Business-to-Business-Kommunikation verschiedener Firmen über das Internet bekannt, die Geschäfts-, Anwendungs- oder Systemfunktionalitäten repräsentieren. Web Services bzw. Servicedienste sind für alle Arten von "Webumgebungen" einsetzbar, d.h. Internet, Intranet oder Extranet. Hierbei ist der Fokus der Kommunikation auf Business-to-Business, Business-to-Consumer, Department-to-Department oder Pear-to-Pear gelegt. Nutzer eines derartigen Web Services bzw. derartiger Servicedienste können menschliche Anwender sein, die den Dienst mit Hilfe eines Browsers entweder auf ein Desktop oder auf einem mobilen Computer nutzen. Außerdem können Anwender auch weitere Anwendungsprogramme oder weitere Webservices sein. Derartige Web Services werden vorwiegend von einem "Serviceprovider" zur Verfügung gestellt. Unter einem Serviceprovider ist in diesem Kontext mindestens ein verfügbares Softwarepaket zu verstehen, das über ein Anwendungsprogramm abrufbar ist, sofern dieses für diesen Servicedienst registriert ist. Der Gegenpart zum Serviceprovider ist der "Servicerequester", der einen bestimmten Web Service bzw. Servicedienst sucht und diesen anfordert.

Zum Betreiben eines Kommunikationsnetzes ist es insbesondere erforderlich, das Managementdaten zwischen den einzelnen Netzkomponenten und dem mindestens einen Netzmanagementsystem ausgetauscht werden. Unter Managementdaten sind beispielsweise die in der ITU-T M.3010 festgelegten Datentypen zu verstehen. Diese betreffen
- das Faultmanagement,
- das Configurationmanagement,
- das Accounting,
- das Performancemonitoring und
- das Securitymanagement.

Die Aufgabe der Erfindung liegt darin, ein neuartiges Verfahren zum Betreiben eines Kommunikationsnetzes anzugeben, das eine zuverlässige, herstellerunabhängige und sichere Kommunikation zwischen den einzelnen Netzkomponenten und zumindest einem Netzmanagementsystem ermöglicht.

Die Aufgabe wird durch die Merkmale des Patentanspruches 1 gelöst.

Der wesentliche Aspekt des erfindungsgemäßen Verfahrens ist darin zu sehen, daß zum Betreiben eines Kommunikationsnetzes, das mindestens ein Netzmanagementsystem und mehrere Netzkomponenten aufweist, die Managementdaten zwischen dem mindestens einen Netzmanagementsystem und mindestens einer der Netzkomponenten über die von einem Web Service zur Verfügung gestellte Kommunikationsinfrastruktur ausgetauscht werden. Hierdurch werden die einzelnen Netzkomponenten eines Telekommunikationsnetzes hinsichtlich Ihres Netzmanagementsystems entkoppelt und somit können plattform- und herstellerunabhängig alle Netzkomponenten über ein zentrales Netzmanagementsystem gemanagt werden ohne das eine zeit- und kostenintensive Anpassung der unterschiedlichen Managementschnittstellen erforderlich ist. Ferner wird durch den Einsatz von Web Services zur Kommunikation der Netzkomponenten mit dem mindestens einen Netzmanagementsystem eine hohe Flexibilität hinsichtlich der Integrationsmöglichkeiten von Netztechnologien und neuer "Backend" Applikationen in bereits bestehenden Netzmanagementsystemen möglich.

Ein weiterer wesentlicher Aspekt des erfindungsgemäßen Verfahrens ist darin zu sehen, daß die unterschiedlichen Netzmanagementfunktionen durch unterschiedliche Managementsystemkomponenten durchgeführt werden. Ferner werden die Managementdaten zwischen den einzelnen Managementsystemkomponenten oder unterschiedlichen Netzmanagementsystemen über die über den Web Service verfügbare Kommunikationsinfrastruktur ausgetauscht. Durch die Ausführung der unterschiedlichen Netzmanagementfunktionen durch unterschiedliche Managementsystemkomponenten und die Kommunikation dieser Managementsystemkomponenten untereinander ebenfalls über die von den Web Services zur Verfügung gestellten Kommunikationsinfrastruktur ist eine direkte Kommunikation zwischen sämtlichen Managementsystemkomponenten möglich. Hierdurch werden die einzelnen Managementsystemkomponenten vom Gesamtnetzmanagementsystem entkoppelt und ihre Schnittstellen offen gelegt.

Vorteilhaft wird für Netzkomponenten, die eine Kommunikation über Web Services nicht unterstützen, mindestens ein Umsetzer vorgesehen, der das Web Service Datenformat in das durch die Netzkomponente unterstützte Datenformat umsetzt und vice versa. Vorteilhaft werden durch den erfindungsgemäßen Umsetzer die Daten der Netzelemente auf Web Services abgebildet bzw. empfangene Web Service Daten auf Datenstrukturen abgebildet, die von den Netzkomponenten verarbeitet werden können. Durch den Umsetzer werden anschließend die umgesetzten Web Service Daten an die angeschlossene Netzkomponente weitergeleitet. Hierdurch wird eine Anpassung von bereits bestehenden, unterschiedliche Kommunikationsschnittstellen unterstützende Netzmanagementsystemen an das "Web-Service-basierte" Netzmanagement realisiert, wodurch eine hohe Flexibilität hinsichtlich der "managebaren" Netzkomponenten erreicht wird.

Ein weiterer Vorteil der Erfindung ist darin zu sehen, daß in mindestens einer Registrierungseinheit Informationen über die Funktionsbeschreibung und das Format der Parameter jedes Web Services in maschinenlesbarer Form gespeichert werden. Vorteilhaft können durch das Vorsehen mindestens einer Registrierungseinheit, d.h. einer "Registry", ohne Beeinträchtigung des bestehenden Netzmanagementssystem sowohl neue Netzfunktionalitäten als auch neue Netzkomponenten oder Netzmanagementkomponenten hinzugefügt werden. Eine derartige Implementierung von neuen Netzmanagementfunktionen in bereits bestehenden Kommunikationsnetzen und den zugehörigen Netzmanagementsystemen ist über Web Services technisch einfach realisierbar und mit einen geringen zeitlichen als auch finanziellen Aufwand verbunden als bei gemäß dem Stand der Technik realisierten Netzmanagementsystemen. Ferner ist durch die Speicherung der Informationen über die Funktionsbeschreibung jedes Web Services eine Netzkomponente in der Lage die Web Services zu finden, die für seinen Anwendungswunsch geeignet sind. Sind diese gefunden, dann können aufgrund der maschinenlesbaren Form des Formats der Parameter des Web Services die mit Hilfe des Web Services an das Netzmanagementsystem zu übergebenden Managementdaten an die Formatanforderungen eines Web Services angepasst werden.

Ein zusätzlicher Vorteil des erfindungsgemäßen Verfahrens beruht darauf, daß in der Registrierungseinheit laufend Informationen über das Auftreten von Netzmanagementvorgängen sowie deren auslösende Ereignisse gespeichert werden und aus den gespeicherten Informationen auslöserspezifische Anwendungsund Interaktionsmuster ermittelt werden. Davon ausgehend werden durch das mindestens eine Netzmanagementsystem neue Web Services oder aus mehreren Web Services bestehende Prozess-Web-Services gebildet. Hierdurch lernt das Netzmanagementsystem automatisch hinzu und das Spektrum der Netzmanagementfunktionen wird vorteilhaft erweitert bzw. hinsichtlich der individuellen Netzanforderungen optimiert.

Zusätzliche vorteilhafte Ausgestaltungen des erfindungsgemäßen Verfahrens sind den weiteren Ansprüchen zu entnehmen.

Anhand geeigneter Ausführungsbeispiele wird im folgenden die Erfindung näher erläutert.
- Figur 1: zeigt ein Kommunikationsnetz mit einem Netzmanagementsystem,
- Figur 2: zeigt ebenfalls ein Kommunikationsnetz bei dem der Aufbau der Kommunikationsinfrastruktur und die drei Kommunikationsvorgänge schematisch dargestellt sind,
- Figur 3: zeigt einen Kommunikationsvorgang zwischen einer Managementsystemkomponente und der Registrierungseinheit,
- Figur 4: zeigt einen Kommunikationsvorgang zwischen einer Netzkomponente und der Registrierungseinheit, und
- Figur 5: zeigt einen Kommunikationsvorgang zwischen einer Netzkomponente und der Registrierungseinheit.

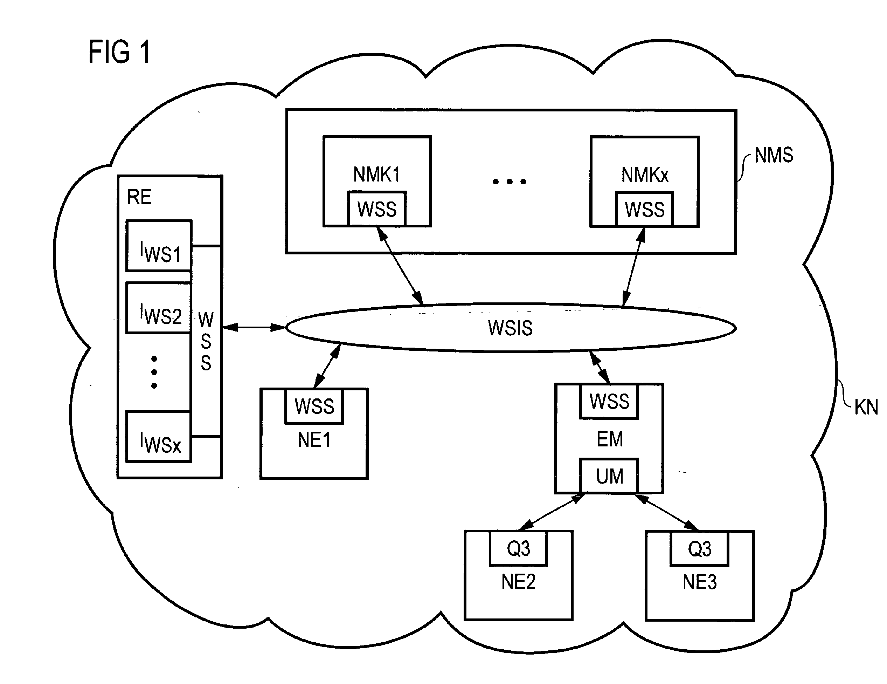

In Figur 1 ist in einem Blockschaltbild ein Kommunikationsnetz KN schematisch dargestellt, daß ein Netzmanagementsystem NMS, eine Registrierungseinheit RE, ein erstes, zweites und drittes Netzelement NE1, NE2, NE3, sowie eine Elementmanagereinheit oder Mediatoreneinheit EM aufweist. Das Netzmanagementsystem NMS, die Registrierungseinheit RE sowie das erste Netzelement NE1 und die Elementmanagereinheit EM sind über die von einem Web Service WS zur Verfügung gestellte Kommunikationsinfrastruktur WSIS untereinander verbunden. Die Verbindung über die Kommunikationsinfrastruktur WSIS eines Webservices WSS ist in Figur 1 mit Hilfe einer gräulich gefärbten Blase WSIS und den entsprechenden Web Service Schnittstellen WSS des Netzmanagementsystems NMS, der ersten Netzkomponente NE1, der Elementmanagereinheit EM sowie der Registrierungseinheit RE angedeutet.

Hierbei ist in der Mediatioreneinheit bzw. die Elementmanagereinheit EM eine Umsetzer UM vorgesehen, der das Web Service Datenformat in das durch das jeweilige Netzelement unterstützte Datenformat umsetzt und vice versa. Im in Figur 1 dargestellten Ausführungsbeispiel weisen beispielsweise das zweite und dritte Netzelement NE2, NE3 keine Web Service Schnittstelle WSS, sondern eine Q3-Schnittstelle auf. Zur Kommunikation des beispielsweise zweiten Netzelementes NE2 mit dem Netzmanagementsystem NMS über die Kommunikationsinfrastruktur WSIS werden die Managementdaten MD durch den Umsetzer UM vom Q3-Datenformat in das durch den Web Service unterstützte XML-Datenformat und umgekehrt umgesetzt.

Das Netzmanagementsystem NMS weist eine erste bis x-te Managementsystemkomponente NMK1 bis NMKx auf, durch die die unterschiedlichen Netzmanagementfunktionen realisiert werden. Jede der ersten bis x-ten Managementsystemkomponente NMK1 bis NMKx weist hierzu eine zur Kommunikation über die Kommunikationsinfrastruktur WSIS der Web Services WS erforderliche Web-Service-Schnittstelle WSS auf. Analog hierzu weisen - wie bereits erläutert - das erste Netzelement NE1 und die Elementmanagereinheit EM ebenfalls eine Web-Service-Schnittstelle WSS auf. In der Registrierungseinheit RE sind erste bis x-te Web-Service-Informationen I_{WS1} bis I_{WSx} abgespeichert, die über eine in der Registrierungseinheit RE angeordneten Web-Service-Schnittstelle WSS von den Netzmanagementsystem NMS oder den ersten bis dritten Netzelementen NE1, NE2, NE3 über die durch den Webservice WS zur Verfügung gestellte Kommunikationsinfrastruktur WSIS abrufbar sind. In Figur 1 ist aus Übersichtlichkeitsgründen beispielhaft nur ein Netzmanagementsystem NMS dargestellt, jedoch ist das Vorsehen mehrerer Netzmanagementsysteme NMS in der Praxis üblich.

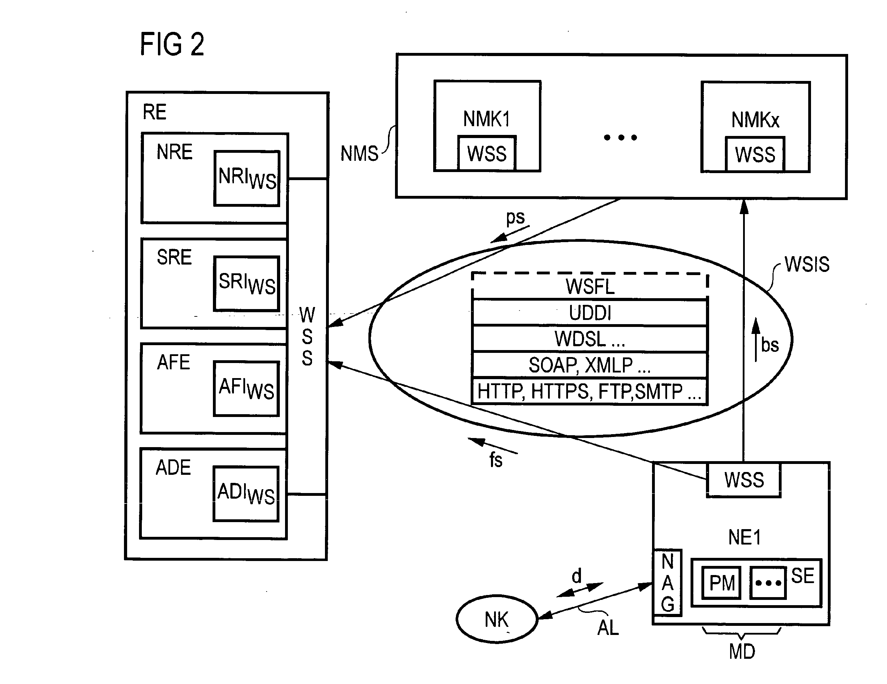

Anhand Figur 2 wird ein Kommunikationsvorgang anhand eines Blockdiagramms schematisch beschrieben. Hierbei ist das Netzmanagementsystem NMS analog zu Figur 1 über die Kommunikationsinfrastruktur WSIS mit der Registrierungseinheit RE sowie mit dem ersten Netzelement NE1 verbunden.

Die Registrierungseinheit RE ist bei den in Figur 2 dargestellten Ausführungsbeispiel hinsichtlich der durch die Registrierungseinheit RE ausgeführten unterschiedlichen Funktionen in eine Netzregistrierungseinheit NRE, eine Semantikregistrierungseinheit SRE, eine Ausführungseinheit AFE sowie eine Adaptionseinheit ADE aufgeteilt. In der Netzregistrierungseinheit NRE sind Registrierungsinformationen NRI_{WS} über die Funktionalität eines registrierten Web Services WS, in der Semantikregistrierungseinheit SRE sind Semantikinformationen SRI_{WS} über die Funktionsbeschreibung und das Format der Parameter jedes Web Services WS, in der Ausführungseinheit AFE sind Ausführungsinformationen AFI_{WS} über die Aufrufsequenz eines Web Services WS und in der Adaptionseinheit ADE sind auslöserspezifische Anwendungs- und Interaktionsmuster ADI_{WS} zur Bildung von neuen Web Services WS bzw. von Prozess-Web-Services PWS aus mehreren bereits bestehenden Web Services WS in einer oder mehreren Speichereinheiten SE (in Figur 2 nicht dargestellt) gespeichert.

Ferner ist die vom einem Webservice WS zur Verfügung gestellte Kommunikationsinfrastruktur WSIS in Figur 2 durch die Unterteilung in unterschiedliche Kommunikationsschichten näher bestimmt. In Figur 2 sind beispielhaft eine Netzprotokollschicht ("HTTP", "HTTPS", "FTP", "SMTP"), eine XML-Messaging-Schicht ("SOAP", "XMLP" etc.), eine Servicebeschreibungsschicht ("WDSL" etc.) sowie eine Serviceregistrierungsschicht ("ÜDDI") und eine Serviceworkflow-Schicht ("WSFL") dargestellt. Die beschriebenen Kommunikationsschichten stellen die zur Übertragung von Managementdaten MD durch einen Web Service WS zur Verfügung gestellte Kommunikationsinfrastruktur WSIS dar.

Im folgenden werden anhand des in Figur 2 dargestellten Ausführungsbeispiels die drei wesentlichen Verfahrensschritte zum Betreiben des Kommunikationsnetzes KN anhand der Netzmanagementaufgabe einer Performancedatenerfassung näher erläutert.

An das erste Netzelement NE1 ist über ein Netzabschlußgerät NAG sowie über eine Anschlußleitung AL das Telekommunikationssystem eines Netzkunden NK beispielhaft angeschlossen. Hierbei kann das Netzelement NE1 beispielsweise als "IP-Router" oder als "SDH-Multiplexer" ausgestaltet sein. In dem ersten Netzelement NE1 ist eine Speichereinheit SE vorgesehen, in der im ersten Netzelement NE1 verarbeitete bzw. ermittelte Managementdaten MD abgespeichert werden.

Durch die Erfassung von Performancedaten PM werden Informationen über die Übertragungsqualität einer Verbindung und somit über die Qualität des zur Verfügung gestellten Dienstes ermittelt. Hierzu wird der vom Netzkunden NK über die Anschlußleitung AL zum Netzabschlußgerät NAG übertragenen kontinuierliche Datenstrom D im Netzabschlußgerät NAG überwacht und Performancedaten PM ermittelt. Diese Performancedaten PM bzw. Managementdaten MD werden in der Speichereinheit SE des ersten Netzelementes NE1 gespeichert. Hierbei erfolgt beispielsweise eine Speicherung der Performancedaten PM solange bis die hierfür vorgesehene Speicherkapazität der Speichereinheit SE des ersten Netzelementes NE1 überschritten ist.

Nach Auftreten einer Überschreitung der hierfür vorgesehenen Speicherkapazität der Speichereinheit SE wird in einem ersten Verfahrensschritt durch das erste Netzelement NE1 eine Suchanfrage fs an die Registrierungseinheit RE, vielmehr die Netzregistrierungseinheit NRE, über die Kommunikationsinfrastruktur WSIS initialisiert und hierdurch Informationen über einen in der Netzregistrierungseinheit NRE registrierten Web Service WS gesucht, über den die in der Speichereinheit SE gespeicherten Performancedaten PM an das Netzmanagementsystem NMS zur Weiterverarbeitung weitergeleitet werden können. Nach Auffinden von Registrierungsinformationen NRI_{WS} über eine geeignete Funktionalität eines oder mehrerer Web Services WS in der Netzregistrierungseinheit NRE werden durch das Netzelement NE1 über die Kommunikationsinfrastruktur WSIS von der Semantikregistrierungseinheit SRE Semantikinformationen SRI_{WS} über die Funktionsbeschreibung und das Format der Parameter des ausgewählten Web Services WS geladen. Hierzu sind die Registrierungsinformationen NRI_{WS} in der Netzregistrierungseinheit NRE sowie die Semantikinformationen SRI_{WS} in der Semantikregistrierungseinheit SRI in maschinenlesbarer Form gespeichert. Zusätzlich sind Informationen über das Laufzeitverhalten jedes Web Services WS in der Netzregistrierungseinheit NRE abgelegt. Hierbei wird als Speicherungsformat in der Registrierungseinheit RE ein auf dem XML-Format aufbauendes Format, insbesondere das Resource-Description-Frame-Work-(RDF)-Format) zur maschinenlesbaren Speicherung eingesetzt. Mit Hilfe eines derartigen auf XML-Format aufbauenden Formats sind die Informationen in maschinenlesbarer Form auf einfache Art und Weise durch die einzelnen Netzkomponenten NE1, NE2, NE3, EM abrufbar sowie auswertbar.

Voraussetzung für das Auffinden eines Webservices in der Netzregistrierungseinheit NRE der Registrierungseinheit RE ist die Registrierung bzw. Abspeicherung von Informationen eines neuen Webservices WS in der Registrierungseinheit RE durch das Netzmanagementsystem NMS. Hierzu werden in einem zweiten Verfahrensschritt durch die den Web Service WS zur Verfügung stellenden Managementsystemkomponenten NMK1, ..., NMKx mit Hilfe einer "Publish"-Anfrage ps an die Registrierungseinheit RE die erforderlichen Informationen über die Funktionalität, das Laufzeitverhalten, die Funktionsbeschreibung sowie das Format der Parameter des neuen Web Services WS übertragen und in den unterschiedlichen Einheiten der Registrierungseinheit RE gespeichert. Die Übertragung dieser Informationen erfolgt ebenfalls über die Kommunikationsinfrastruktur WSIS durchgeführt.

Mit Hilfe der durch die Netzregistrierungseinheit NRE sowie der Semantikregistrierungseinheit SRE an das Netzelement NE1 übertragenen Informationen über den angeforderten Webservice WS werden die im Netzelement NE1 gespeicherten Überwachungsparameter PM aufbereitet. In einem dritten Verfahrensschritt wird durch einen "Bind"-Vorgang bs über die Kommunikationsinfrastruktur WSIS der ausgewählte Web Services WS an das erste Netzelement NE1 gebunden und die aufbereiteten Performancedaten PM an die Netzmanagementkomponente NMK1 übertragen, die für den gebundenen Web Service WS zuständig ist.

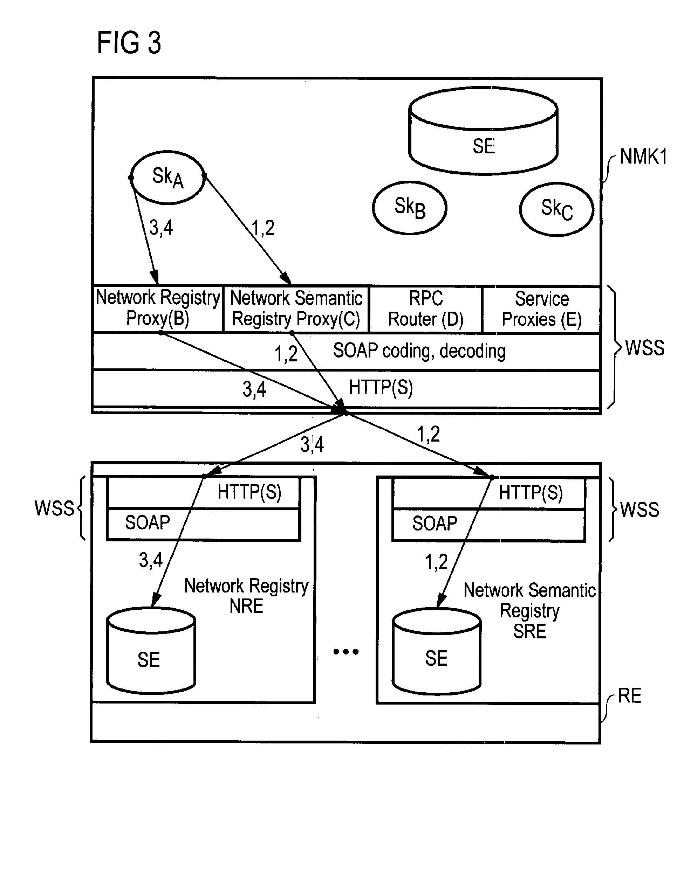

In Figur 3 ist beispielhaft ein Kommunikationsvorgang zur Registrierung eines Web Services WS zwischen der ersten Netzmanagementkomponente NMK1 und der Netzregistrierungseinheit NRE ("Network Registry") sowie der Semantikregistrierungseinheit SRE ("Network Semantic Registry") über die Kommunikationsinfrastruktur WSIS des jeweiligen Web Services WS schematisch dargestellt, der den zuvor beschriebenen zweiten Verfahrensschritt entspricht Hierbei weisen sowohl die erste Managementsystemkomponente NMK1 als auch die Netzregistrierungseinheit NRE sowie die Semantikregistrierungseinheit SRE beispielhaft jeweils eine Speichereinheit SE zur Speicherung der unterschiedlichen Managementdaten MD auf. Die grau hinterlegten Blöcke in Figur 3 sind wiederum Elemente der Kommunikationsinfrastruktur WSIS bzw. stellen die Web-Service-Schnittstelle WSS des jeweiligen Web Services WS.

Die erste Managementsystemkomponente NMK1 weist eine erste, zweite und dritte Subkomponente SK_{A}, SK_{B}, SK_{C} auf, die jeweils unterschiedliche Funktionen der ersten Netzmanagementkomponente NMK1 realisieren. So ist beispielsweise die erste Subkomponente SK_{A} zur Publizierung von verfügbaren Web Services in der Registrierungseinheit RE, die zweite Subkomponente SK_{B} zur Ermittlung von IP bezogenen Performancedaten IP-PM und die dritte Subkomponente SK_{C} zur Ermittlung von SDH bezogenen Performancedaten SDH-PM vorgesehen.

Im betrachteten Ausführungsbeispiel wird durch die erste Managementsystemkomponente NMK1 die Performancedatenverarbeitung bzw. -auswertung durchgeführt. Hierbei wird in einem ersten Schritt 1 die erste Subkomponente SK_{A} gestartet, die die Funktionsbeschreibung des zu publizierenden Web Services WS zur Performancedatenverarbeitung in der Semantikregistrierungseinheit SRE überprüft. Zu diesem Zweck wird durch die erste Subkomponente SK_{A} über die Kommunikationsinfrastruktur WSIS, d.h. die "Network Semantic Registry Proxy (C)"-Schicht sowie die "SOAP coding/decoding"-Schicht und die "Http-Netzprotokoll"-Schicht eine Verbindung zur Semantikregistrierungseinheit SRE aufgebaut. In der Semantikregistrierungseinheit SRE wird über die "Http-Netzprotokoll"-Schicht sowie die "SOAP coding/decoding"- Schicht, d.h. über die durch den Web Service WS zur Verfügung gestellte Kommunikationsinfrastruktur WSIS, durch die erste Subkomponente SK_{A} auf die Speichereinheit SE zugegriffen. Ist in der Speichereinheit SE der Semantikregistrierungseinheit SRE die vollständige Semantikinformation SRI_{WS} des zu publizierenden Web-Services WS noch nicht gespeichert, dann wird durch die erste Subkomponente SK_{A} in einem zweiten Schritt 2 die fehlende Semantikinformation SRI_{WS} in der Semantikregistrierungseinheit SRE publiziert bzw. dort gespeichert.

Im Anschluß daran wird durch die erste Subkomponente SK_{A} in einem dritten Schritt 3 über die Kommunikationsinfrastruktur des Webservices WS überprüft, ob die Registrierungsinformationen NRI_{WS} des zu publizierenden Web Services WS in der Netzregistrierungseinheit NRE gespeichert sind. Zu diesem Zweck wird durch die erste Subkomponente SK_{A} eine Verbindung über die "Network Registry Proxy (B)"-Schicht, die "Soap coding/decoding"-Schicht sowie die "Http-Netzprotokoll"-Schicht zur Netzwerkregistrierungseinheit NRE aufgebaut, in der analog zur Semantikregistrierungseinheit SRE über die "Http-Netzprotokoll"-Schicht sowie die "Soap coding/decoding"-Schicht auf die Speichereinheit SE zugegriffen wird. Bei fehlenden Registrierungsinformationen NRI_{WS} über den betrachteten Web Service WS werden durch die erste Subkomponente SK_{A} in einem vierten Schritt 4 die fehlenden Registrierungsinformationen NRI_{WS} in der Speichereinheit SE der Netzregistrierungseinheit NRE gespeichert. Durch die Ausführung der beschriebenen vier Schritte 1, 2, 3, 4 wird durch die erste Subkomponente SK_{A} sichergestellt, daß der zur Verfügung gestellte Web Service WS zur Performancedatenverarbeitung ausreichend im Kommunikationsnetz KN publiziert wird, d.h. ausreichend Informationen über den zur Verfügung gestellten Web Service WS in der Netzregistrierungseinheit NRE sowie der Semantikregistrierungseinheit NRE, SRE in maschinenlesbarer Form zur Verfügung stehen.

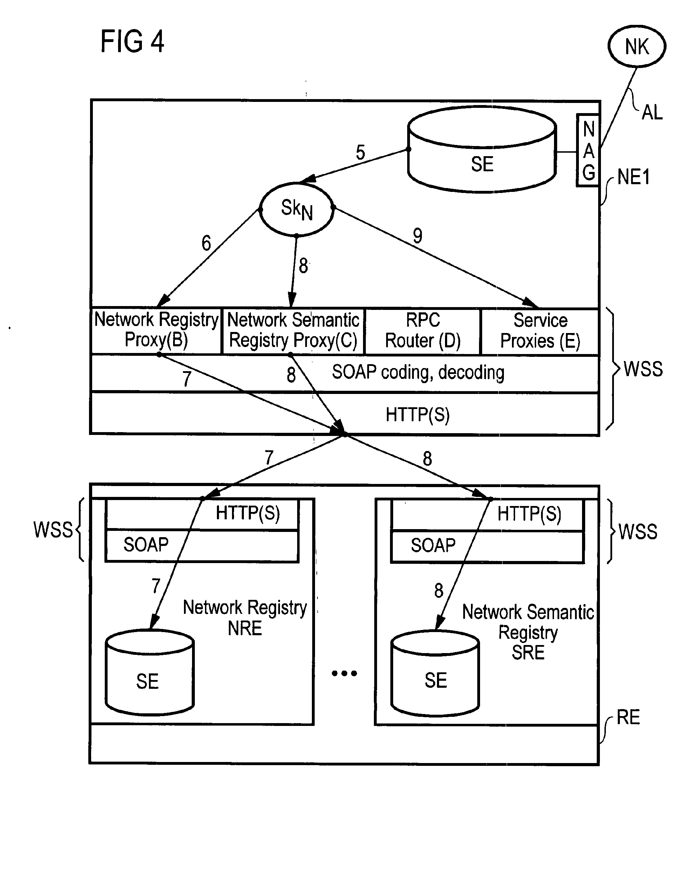

Anhand Figur 4 wird beispielhaft der zweite Verfahrensschritt beim Betreiben des Kommunikationsnetzes KN beschrieben. Hierzu ist in Figur 1 das erste Netzelement NE1 sowie die Registrierungseinheit RE dargestellt, wobei das erste Netzelement NE1 eine Speichereinheit SE sowie eine N-te Subprozedur SK_{N} zur Weiterleitung der Performancedaten PM an das Netzmanagementsystem NMS aufweist.

Anhand Figur 4 werden die weiteren Schritte 5,...,9 erläutert, die erforderlich sind, um durch das erste Netzelement NE1 einen für den auszuführenden Netzmanagementvorgang geeigneten Web Service WS in der Registrierungseinheit RE zu finden. Im ersten Netzelement NE1, das beispielsweise ein "Internet-Protokoll-Router" sein könnte, werden die im Netzabschlußgerät NAG ermittelten Performancedaten PM erfaßt und in der Speichereinheit SE abgespeichert. Sobald durch die Menge der gespeicherten Performancedaten PM in der Speichereinheit SE ein vorbestimmter Speicherfüllstand überschritten wird, wird diese Überschreitung in einem fünften Schritt 5 der N-ten Subprozedur SK_{N} angezeigt. Im Anschluß daran wird in einem sechsten Schritt 6 durch die N-te Subprozedur SK_{N} eine Suchanfrage fs an die Registrierungseinheit RE geschickt. Hierzu wird durch die N-te Subprozedur SK_{N} über die Kommunikationsinfrastruktur WSIS, d.h. die "Network Registry Proxy (B)", das "Soap coding/decoding" sowie das "http-Netzprotokoll" eine Verbindung mit der Netzregistrierungseinheit RE aufgebaut. Über die Verbindung werden in einem siebten Schritt 7 durch die N-te Subprozedur SK_{N} die in der Netzregistrierungseinheit NRE hinsichtlich eines zur Verarbeitung von Performancedaten PM gespeicherten Web Services WS die Registrierungsinformationen NRI_{WS} durchsucht und nach dem Auffinden von Registrierungsinformationen NRI_{WS} in einem achten Schritt 8 über einen hierfür geeigneten Web Service WS durch die N-te Subprozedur SK_{N} eine Verbindung zur Semantikregistrierungseinheit SRE aufgebaut. Der Aufbau der Verbindung erfolgt hierbei über die "Network Semantik Proxy (C)", das "SOAP coding/decoding" und das "Http-Netzprotokoll". Über die bestehende Verbindung werden im folgenden die Schnittstellenbeschreibung des Web Services WS, d.h. die Semantikinformationen SRI_{WS} über die Form der Parameter des jeweiligen Web Services WS zur N-ten Subprozedur SK_{N} übertragen. Mit Hilfe der empfangenen Registrierungsinformationen NRI_{WS} über das Laufzeitverhalten sowie die Funktionsbeschreibung sowie der Semantikinformationen SRI_{WS} über die Form der Parameter des ausgewählten Web Services WS wird in dem ersten Netzelement NE1 eine "Web Service Proxy (E)"-Schnittstelle gebildet, die auf die bestehenden Kommunikationsinfrastruktur WSIS aufsetzt.

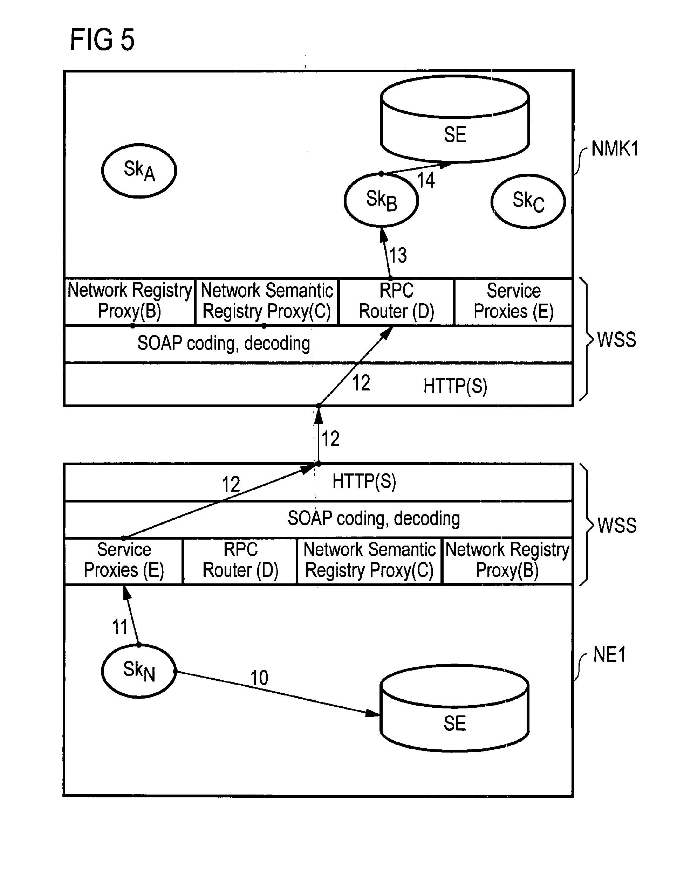

Anhand Figur 5 wird der dritte Verfahrensschritt zur Zuordnung eines ausgewählten Web Services WS zum ersten Netzelement NE1 anhand eines "Bind"-Vorgangs bs näher beschrieben. Hierbei wird die Kommunikation der ersten Managementsystemkomponente NMK1 mit dem ersten Netzelement NE1 über die durch den ausgewählten Web Service WS zur Verfügung gestellte Kommunikationsinfrastruktur WSIS durchgeführt.

Die erste Managementsystemkomponente NMK1 weist eine Speichereinheit SE sowie die erste, zweite und dritte Subkomponente SK_{A}, SK_{B}, SK_{C} auf. Das erste Netzelement NE1 weist die N-te Subprozedur SK_{N} sowie eine Speichereinheit SE auf. Nach dem Auffinden des Web Services WS zur Übermittlung der Performancedaten PM von dem ersten Netzelement NE1 an die zuständige erste Managementsystemkomponente NMK1 wird durch die N-te Subprozedur SK_{N} im ersten Netzelement NE1 in einem zehnten Schritt 10 die Performancedaten PM aus der Speichereinheit SE geladen. Die Perfomancedaten PM werden im Anschluß in einem elften Schritt 11 durch die N-te Subprozedur SK_{N} an die zuvor gebildete "Service Proxy (E)"-Schnittstelle , die ein Element der Kommunikationsinfrastruktur WSIS des ausgewählten Web Services WS darstellt, übermittelt. Durch die "Service-Proxy (E)"-Schnittstelle wird die Beschreibung des ausgewählten Web-Services WS, dessen Proxy sie darstellt, ermittelt. Die von der N-ten Subprozedur SK_{N} übergebenen Performancedaten PM werden durch die "Service-Proxy (E)"-Schnittstelle derart aufbereitet, daß die aufbereiteten Performancedaten PM das geforderte Format der Parameter für die Nutzung des ausgewählten Web Services WS aufweisen. Beispielsweise generiert die "Service-Proxy (E)"-Schnittstelle gemäß den "RDF-Definitionen" eine "XML-Datei" aus den Perfomancedaten PM und konkateniert anschließend den Inhalt der XML-Datei in einen Datenstring. Der Datenstring wird in einem zwölften Schritt 12 über die Service Proxy (E)-Schnittstelle an die gefundenen Adressen, beispielsweise
http://powerTelco.intranet/network/pm-data/consumtion, des ausgewählten Web Services WS, die in der ersten Managementsystemkomponente NMK1 gespeichert sind, übermittelt. Hierzu wird eine Kommunikation über die "RPC-Router (D)"-Schicht mit der zweiten Subkomponente SK_{B} aufgebaut.

Im dargestellten Ausführungsbeispiel wird aus Übersichtlichkeitsgründen nur eine Managementsystemkomponente NMK1 dargestellt. Weitere Managementsystemkomponente NMKx, welche dieselbe Managementfunktion wie die erste Netzmanagementkomponente NMK1 ausführen und somit als Redundanz vorgesehen sind, werden im betrachteten Ausführungsbeispiel nicht betrachtet.

Die Performancedaten PM werden von der ersten Managementsystemkomponente NMK1 über die "RPC-Router (D)"-Schicht empfangen und wie bereits erwähnt in einem dreizehnten Schritt 13 an die zweite Subkomponente SK_{B} weitergeleitet. Hierbei kommt der "RPC-Router (D)"-Schicht die Aufgabe zu, die Performancedaten PM an der Subkomponenten SK_{B},SK_{C} weiterzuleiten, die für die Verarbeitung des vorliegenden Datentyps der Performancedatenüberwachung vorgesehen ist, d.h. beispielsweise im betrachteten Ausführungsbeispiel an die für die Überwachung von Internet-Protokoll-Performancedaten zuständige zweite Subkomponente SK_{B}. Die zweite Subkomponente SK_{B} wertet die erhaltenen Performancedaten PM aus und speichert die Auswertungsergebnisse in einem vierzehnten Schritt 14 in der Speichereinheit SE ab.

Der in Figur 3 bis 5 beschrieben Web Service WS zur Performancedatenverarbeitung stellt nur ein Beispiel für einen speziellen Netzmanagementvorgang dar. Das erfindungsgemäße Verfahren ist in analoger Weise auf sämtliche innerhalb eines Kommunikationsnetzes auszuführende Netzmanagementvorgänge anwendbar.

Durch die in der Registrierungseinheit RE vorgesehenen Adaptionseinheit ADE werden laufend Informationen über das Auftreten von Netzmanagementvorgängen sowie deren auslösenden Ereignisse, beispielsweise Alarmmeldungen, gespeichert, aus denen auslöserspezifische Anwendungs- und Interaktionsmuster ermittelt werden. Ausgehend von den ermittelten auslöserspezifische Anwendungs- und Interaktionsmuster werden durch Rückschlußtechniken oder Selbstverbesserungstechniken durch das Netzmangementsystem NMS neue Web Services WS oder aus mehreren bekannten Web Services WS zusammengesetzte Prozess-Web-Services PWS gebildet. Hierdurch wird ein automatische Erweiterung der Netzmanagementsystemfunktionalitäten und eine Anpassung des Netzmanagementsystems NMS an individuelle kundenspezifische Ereignisse möglich.

## Patentansprüche

1. Verfahren zum Betreiben eines Kommunikationsnetzes (KN), das mindestens ein Netzmanagementsystem (NMS) und mehrere Netzkomponenten (NE1,NE2,NE3,EM) aufweist,
- bei dem Managementdaten (MD) zwischen dem mindestens einen Netzmanagementsystem (NMS) und mindestens einer der Netzkomponenten (NE1) über die von einem Web Service (WS) zur Verfügung gestellte Kommunikationsinfrastruktur (WSIS) ausgetauscht werden.

2. Verfahren nach Anspruch 1,
**dadurch gekennzeichnet,**
**daß** die unterschiedlichen Netzmanagementfunktionen durch unterschiedliche Managementsystemkomponenten (NMK1 bis NMKx) durchgeführt werden.

3. Verfahren nach Anspruch 2,
**dadurch gekennzeichnet,**
**daß** Managementdaten (MD) zwischen den einzelnen Managementsystemkomponenten (NMK1,...,NMKx) oder unterschiedlichen Netzmanagementsystemen (NMS) über die über den Web Service (WS) verfügbare Kommunikationsinfrastruktur (WSIS) ausgetauscht werden.

4. Verfahren nach einem der Ansprüche 1 bis 3,
**dadurch gekennzeichnet,**
**daß** für Netzkomponenten (NE1,NE2,NE3), die eine Kommunikation über Web Services (WS) nicht unterstützen, mindestens ein Umsetzer (UM) vorgesehen wird, der das Web Service Datenformat (XML) in das durch die Netzkomponente unterstützte Datenformat (Q3) umsetzt und vice versa.

5. Verfahren nach einem der Ansprüche 1 bis 4,
**dadurch gekennzeichnet,**
**daß** in mindestens einer Registrierungseinheit (RE) Informationen (I_{WS1} bis I_{WSx}) über die Funktionsbeschreibung und das Format der Parameter jedes Web Services (WS) in maschinenlesbarer Form gespeichert werden.

6. Verfahren nach einem der Ansprüche 1 bis 5,
**dadurch gekennzeichnet,**
**daß** zusätzlich nach Informationen über die Funktionalität und das Laufzeitverhalten jedes Web Services in maschinenlesbarer Form gespeichert werden.

7. Verfahren nach Anspruch 5 oder 6,
**dadurch gekennzeichnet,**
**daß** zur Umsetzung eines Netzmanagementvorgangs durch eine Netzkomponente (NE1,NE2,NE3,EM) oder durch eine Managementsystemkomponente (NMK1 bis NMKx) einer der gespeicherten Web Services (WS) ausgewählt wird und
**daß** anhand der in der Registrierungseinheit (RE) gespeicherten Informationen (I_{WS1} bis I_{WSx}) über den ausgewählten Web Service (WS) die zu übermittelten Managementdaten (PM) über die durch den ausgewählten Web Service (WS) zur Verfügung gestellte Kommunikationsinfrastruktur (WSIS) an eine Managementsystemkomponente (NMK1) weitergeleitet werden.

8. Verfahren nach Anspruch 5 oder 6,
**dadurch gekennzeichnet,**
**daß** zur Umsetzung eines Netzmanagementvorgangs durch eine Netzkomponente (NE1,NE2,NE3,EM) oder durch eine Managementsystemkomponente (NMK1 bis NMKx) die in der Registrierungseinheit (RE) für eine Umsetzung des Netzmanagementvorgangs gespeicherten Web Services (WS) ermittelt werden,
**daß** einer oder mehrere der gespeicherten Web Services (WS) ausgewählt wird und
**daß** anhand der in der Registrierungseinheit (RE) gespeicherten Informationen (I_{WS1} bis I_{WSx}) über den ausgewählten Web Service (WS) die zu übermittelnden Managementdaten (MD) über die durch den ausgewählten Web Service (WS) zur Verfügung gestellte Kommunikationsinfrastruktur (WSIS) an eine Managementsystemkomponente (NMK1) weitergeleitet werden.

9. Verfahren nach Anspruch 7 oder 8,
**dadurch gekennzeichnet,**
**daß** die Auswahl eines Web Services (WS) durch Auswertung der Funktionsbeschreibung durchgeführt wird.

10. Verfahren nach einem der Ansprüche 5 oder 6,
**dadurch gekennzeichnet,**
**daß** die Informationen (I_{WS1} bis I_{WSx}) über die Funktionalität, das Laufzeitverhalten, die Funktionsbeschreibung und das Format der Parameter jedes Web Services (WS) in der Registrierungseinheit in einem auf dem XML-Format aufbauenden Format, insbesondere dem Resource-Description-Framework-(RDF)-Format, gespeichert werden.

11. Verfahren nach einem der Ansprüche 1 bis 10,
**dadurch gekennzeichnet,**
**daß** zur Bearbeitung von komplexen Netzmanagementvorgängen aus mehreren Web Services (WS) ein Prozess-Web-Service (PWS) gebildet wird, der über die Web-Service-Flow-Language (WSFL) oder über die DARPA-Agent-Markup-Language-Services (DAML-S) oder über ein darauf aufbauenden Service aufrufbar ist.

12. Verfahren nach einem der Ansprüche 1 bis 11,
**dadurch gekennzeichnet,**
**daß** in der Registrierungseinheit (RE) laufend Informationen über das Auftreten von Netzmanagementvorgängen sowie deren auslösende Ereignisse gespeichert werden,
**daß** aus den gespeicherten Informationen auslöserspezifische Anwendungs- und Interaktionsmuster ermittelt werden und davon ausgehend durch das mindestens eine Netzmanagementsystem (NMS) neue Web Services (WS) oder aus mehreren Web Services (WS) bestehende Prozess-Web-Services (PWS) gebildet werden.

13. Verfahren nach Anspruch 12,
**dadurch gekennzeichnet,**
**daß** die Bildung der Prozess-Web-Services (PWS) aus den auslöserspezifischen Anwendungs- und Interaktionsmuster mit Hilfe von Rückschlußtechniken oder Selbstverbesserungstechniken durchgeführt wird.

14. Verfahren nach einem der Ansprüche 1 bis 13,
**dadurch gekennzeichnet,**
**daß** die unterschiedlichen Funktionen der Registrierungeinheit (RE) durch eine Netzregistrierungseinheit (NRE), eine Semantikregistrierungseinheit (SRE), eine Ausführungseinheit (AFE) sowie eine Adaptionseinheit (ADE) durchgeführt werden.

15. Verfahren nach einem der Ansprüche 1 bis 14,
**dadurch gekennzeichnet,**
**daß** eine Netzkomponente (NE1,NE2,NE3,EM) durch ein Netzelement (NE1,NE2,NE3) oder durch eine Elementmanagereinheit (EM) oder durch eine Mediatoreneinheit (EM) realisiert wird.

16. Verfahren nach einem der Ansprüche 1 bis 15,
**dadurch gekennzeichnet,**
**daß** durch einen Web Service (WS) eine Systemfunktionalität realisiert wird, die als Kommunikationsinfrastruktur (WSIS) unterschiedliche Netzprotokolle (HTTP(S),FTP,SMTP), Servicebeschreibungen (WDSL) und Serviceregistrierung (UDDI) aufweisen.

17. Verfahren nach einem der Ansprüche 1 bis 16,
**dadurch gekennzeichnet,**
**daß** durch einen Web Service (WS) als zusätzliche Kommunikationsinfrastruktur das XML Messaging (SOAP, XMLP) oder der Serviceworkflow (WSFL) zur Verfügung gestellt wird.

18. Verfahren nach einem der Ansprüche 1 bis 17,
**dadurch gekennzeichnet,**
**daß** die durch Benutzer durchgeführte Bedienung des mindestens einen Netzmanagementsystems (NMS) über eine adaptive graphische Benutzeroberfläche durchgeführt wird.
